# EUROPÄISCHE PATENTSCHRIFT

(11) **EP 1 072 758 B1**
(45) Veröffentlichungstag und Bekanntmachung des Hinweises auf die Patenterteilung: **14.09.2005**
(21) Anmeldenummer: 00810633.8
(22) Anmeldetag: 18.07.2000
(51) Int. Cl.: F01D 5/18, F02C 7/18, F02C 7/224, F02C 3/22, F02C 3/20, F02C 3/30, F02C 7/16

(54) **Verfahren zum Kühlen von Gasturbinenschaufeln**
Method for cooling gas turbine blades
Procédé pour le refroidissement des aubes d'une turbine à gaz

(30) Priorität: 26.07.1999 DE 19934927
(43) Veröffentlichungstag der Anmeldung: 31.01.2001
(73) Patentinhaber: Alstom Technology Ltd, 5400 Baden (CH)
(72) Erfinder: Griffin, Timothy, Dr., 5408 Ennetbaden (CH)

(56) Entgegenhaltungen:
- EP-A- 0 684 367
- DE-A- 19 621 385
- DE-A- 19 716 721
- US-A- 5 125 793
- US-A- 5 896 738

## Beschreibung

### TECHNISCHES GEBIET

Die vorliegende Erfindung bezieht sich auf das Gebiet der Gasturbinen. Sie betrifft ein Verfahren zum Kühlen von Leit- und/oder Laufschaufeln in den Turbinenstufen einer Gasturbinenanlage, bei welchem Verfahren ein Kühlmedium, das einen ersten Brennstoff enthält, durch das Innere der zu kühlenden Leit- und/oder Laufschaufetn geschickt und dort unter Einsatz eines Katalysators einem endothermen chemischen Prozess unterzogen wird, bei welchem Prozess der erste Brennstoff zumindest teilweise in einen zweiten Brennstoff umgewandelt wird, und bei welchem Verfahren das den zweiten Brennstoff enthaltene Kühlmedium nach Austritt aus den Leit- und/oder Laufschaufeln als Brennstoff zum Antrieb der Gasturbinenanlage eingesetzt wird.

Ein solches Verfahren ist z.B. aus der Druckschrift US-A-5,125,793 bekannt. Bei dem bekannten Verfahren wird ein endothermer Brennstoff zur Kühlung durch die mit einer Katalysatorschicht ausgekleideten Kühlkanäle einer Gasturbinen-Laufschaufel geschickt und dort gleichzeitig verdampft und in mehrere, teilweise brennbare Komponenten zerlegt.

### STAND DER TECHNIK

Fortlaufende Weiterentwicklungen von Gasturbinen machen es möglich, die Turbineneintrittstemperaturen auf immer höhere Werte zu erhöhen, wodurch theoretisch höhere Wirkungsgrade beim zugrundeliegenden Kreisprozess erreicht werden können. Diese Erhöhungen sind jedoch mit den folgenden zwei Problemen verknüpft:
1. Wie können die Schaufeln der Gasturbine, insbesondere in den Eingangsstufen, wo die Gastemperaturen 800°C übersteigen, ohne den übermässigen Einsatz von Kühlluft wirkungsvoll gekühlt werden?
2. Wie kann mit den immer höher werdenden Turbinenaustrittstemperaturen von bis zu 700°C umgegangen werden? Aufgrund von werkstoffbedingten Beschränkungen kann die Dampftemperatur in Kombianlagen auf nicht viel mehr als 550°C überhitzt werden. Daher ist es für den Dampferzeuger nicht möglich, die gesamte mögliche Exergie der Turbinenabgase auszunutzen.

Es ist in der Vergangenheit bereits vorgeschlagen worden (siehe z.B. die US-A-5,795,130), Gasturbinenschaufeln, insbesondere in Kombikraftwerken, anstelle von komprimierter Luft, mit Dampf zu kühlen, um sowohl den Wirkungsgrad im Kreisprozess als auch die Wirksamkeit der Kühlung zu erhöhen. Sowohl die Laufschaufeln als auch die Leitschaufeln sind dabei dampfgekühlt. Der Dampf wird bei hohem Druck der Dampfturbine entnommen und ihr bei niedrigerem Druck wieder zugeführt.

Es ist weiterhin vorgeschlagen worden (US-A-5,896,738), bei einer ansonsten herkömmlich gekühlten Gasturbine in einer thermochemischen Rekuperation einen Teil der in den Turbinenabgasen enthaltenen Energie zur Reformierung eines gasförmigen, mit Dampf vermischten Brennstoffes zu verwenden, der dann als Brennstoff der Brennkammer der Gasturbine zugeführt wird. Ein anderer Vorschlag (US-A-5,431,007) betrifft eine vergleichbare Verwendung eines reformierten Brennstoffes bei einer dampfgekühlten Gasturbine.

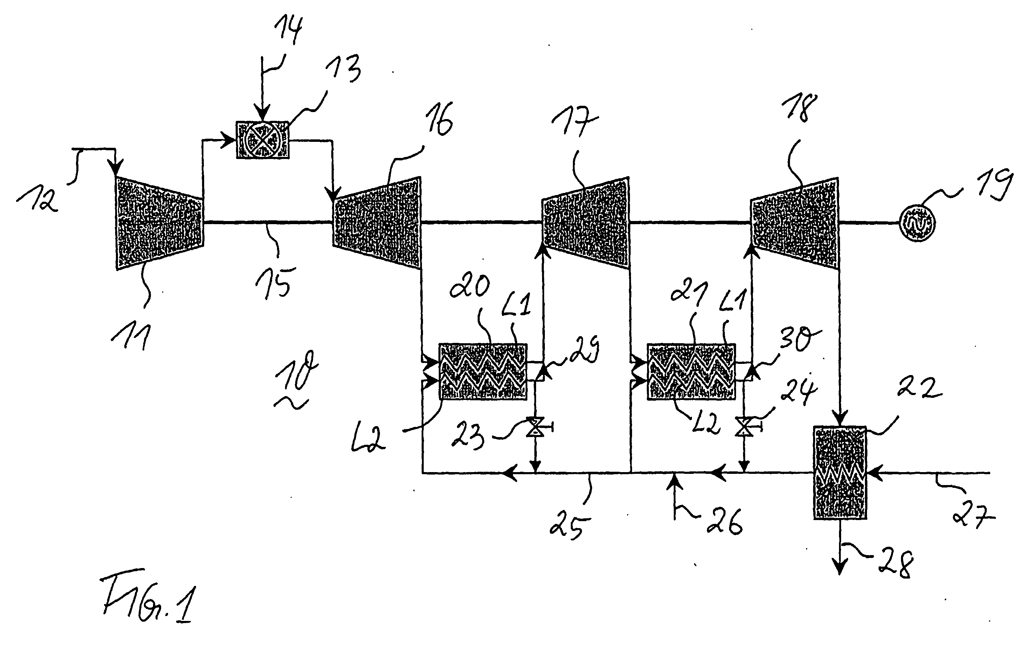

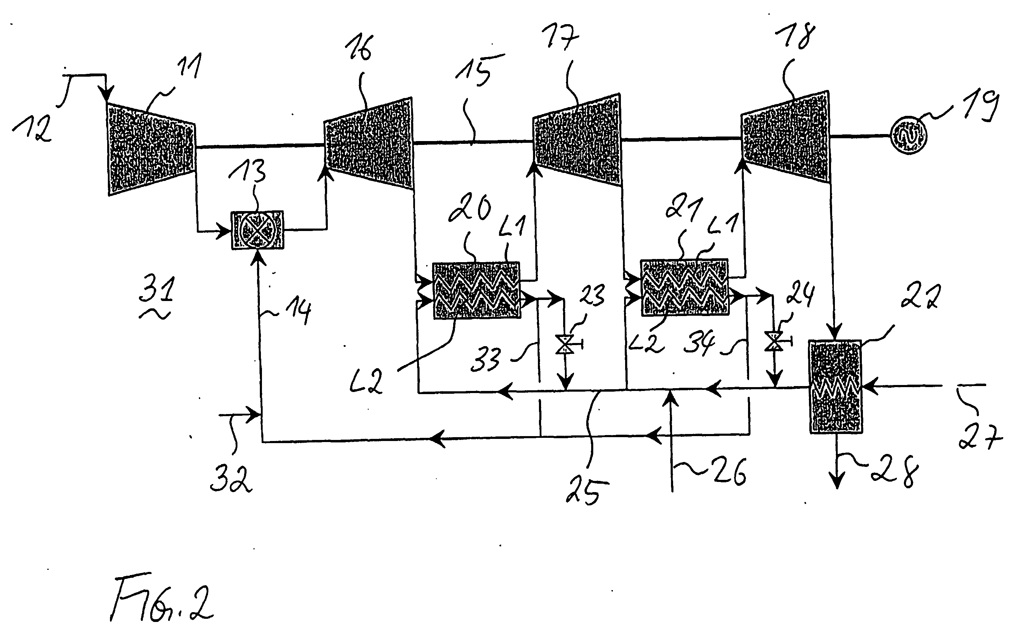

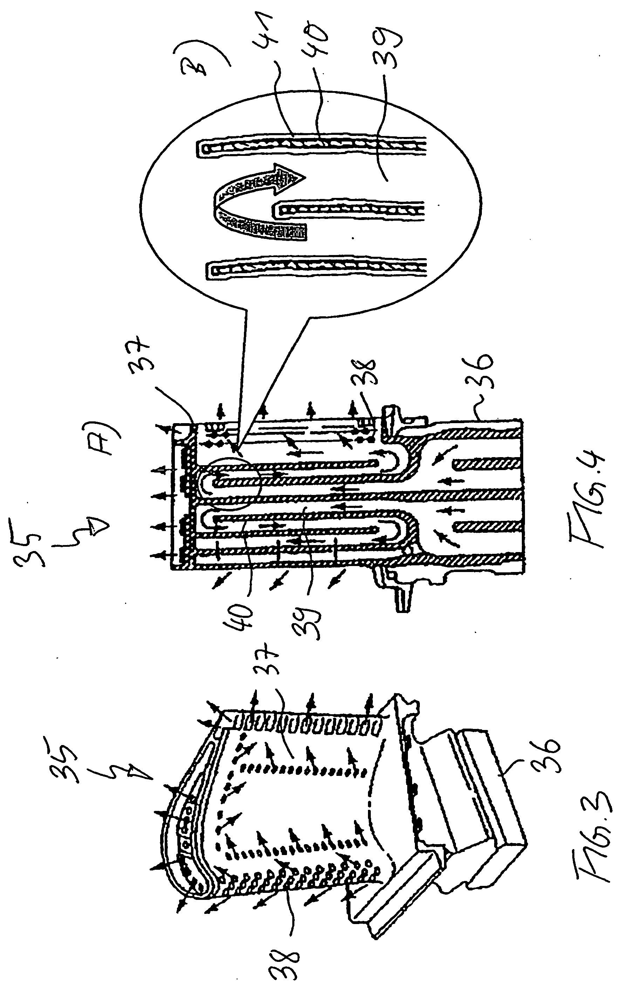

In der US-A-5,590,518 wird vorgeschlagen, im Rahmen einer Gasturbine mit thermochemischer Rekuperation die letzte Turbinenstufe der Gasturbine mit dem Dampf-Brennstoff-Gemisch entweder vor der Reformierung (Fig. 4) oder nach der Reformierung (Fig. 3) zu kühlen. Die Reformierung wird dabei in einem externen Reformer vorgenommen.

In der eingangs genannten US-A-5,125,793 schliesslich wird (ohne Einsatz von Dampf und ohne Reformierung) zur Kühlung der Schaufeln einer Gasturbine ein endothermer flüssiger Brennstoff, z.B. das Standard-Kerosin JP7, verwendet. Der Brennstoff wird durch mit einer Katalysatorschicht beschichtete Kühlkanäle in den Schaufeln geschickt und dort gleichzeitig verdampft und katalytisch in verschiedene Komponenten zerlegt, so dass gleichzeitig die Verdampfungswärme und der Energieverbrauch der endothermen Zerlegungsreaktion zur Kühlung verwendet wird.

Die bekannten Kühlverfahren haben verschiedene Nachteile: Bei den Kühlverfahren mit externer Reformierung wird ein externer Reformer mit entsprechenden Leitungsverbindungen benötigt, was einen erheblichen zusätzlichen apparativen und Platz-Aufwand bedeutet. Die Kühlung durch einen endothermen Brennstoff, wie sie in der letztgenannten Druckschrift beschrieben ist, beschränkt sich auf Gasturbinenanlagen, die mit speziellen flüssigen Brennstoff betrieben werden, während die Gasturbinenanlagen in Kombikraftwerken üblicherweise mit Erdgas (natural gas NG) gefahren werden.

Aus der DE-A1-196 21 385 und der DE-A1-197 16 721 sind Verfahren zum Betrieb einer Gasturbine und nach den Verfahren arbeitende Gasturbinen bekannt, bei denen als Kühlmittel für die Gasturbine eine Mischung aus Erdgas und Dampf durch die mit einem Katalysator beschichteten Kühlkanäle der Leit- und/oder Laufschaufeln geschickt wird, um dort durch endotherme Reformierungsumsetzungen Wärme abzuführen. Bei der DE-A1-196 21 385 wird das umgewandelte und aufgeheizte Kühlmittel direkt und vollständig zur Brennkammer der Gasturbine geführt. Bei der DE-A1-197 16 721 wird das umgewandelte Kühlmittel bei den Laufschaufeln direkt in den Arbeitsraum der Gasturbine eingeleitet und bei den Leitschaufeln in die Brennkammer geleitet. Einer unvollständigen Reformierung des Kühlmittels in den Kühlkanälen kann hierbei nicht abgeholfen werden.

### DARSTELLUNG DER ERFINDUNG

Es ist daher Aufgabe der Erfindung, ein Kühlverfahren für Gasturbinen und eine Gasturbinenanlage anzugeben, welche die Nachteile bekannter Kühlverfahren vermeiden, und insbesondere eine sehr effektive Kühlung der Turbinenschaufeln bei optimaler Ausnutzung der eingesetzten Energie sowie platzsparend und mit geringem apparativen Aufwand verwirklicht.

Die Aufgabe wird durch die Gesamtheit der Merkmale der Ansprüche 1 und 8 gelöst. Der Kern der Erfindung besteht darin, dass, wenn die Reformierung des Brennstoffes in den Turbinenschaufeln nicht vollständig ist, nach Durchlaufen des Reformierungsprozesses jeweils ein Teil des Kühlmediums abgezweigt und dem zu reformierenden Kühlmedium wieder zugefügt wird.

Eine bevorzugte Ausführungsform des erfindungsgemässen Verfahrens, die sich durch besondere Einfachheit auszeichnet, ist dadurch gekennzeichnet, dass im Inneren der zu kühlenden Leit- und/oder Laufschaufeln Kühlkanäle vorgesehen sind, welche durch mit einer Katalysatorschicht bedeckte Wände begrenzt sind, und dass das Kühlmedium durch die Kühlkanäle geschickt wird.

Bevorzugt wird dabei die Reformierung des Methans in den Leit- und/oder Laufschaufeln bei Temperaturen zwischen 600 und 800°C und Drücken zwischen 10 und 30 bar durchgeführt, und liegt in dem Kühlmedium vor Eintritt in die Leit- und/oder Laufschaufeln ein Verhältnis von Dampf zu Methan von 3:1 bis 4:1 auf molarer Basis vor.

Eine weitere bevorzugte Ausführungsform des Verfahrens nach der Erfindung zeichnet sich dadurch aus, dass das Kühlmedium nach Durchlaufen des Reformierungsprozesses in der jeweiligen Leit- und/oder Laufschaufel durch entsprechende Austrittsöffnungen zumindest teilweise direkt in die jeweilige Turbinenstufe der Gasturbinenanlage austritt. Hierdurch wird eine effektivitätssteigernde Zwischenaufheizung ("reheating") der durch die Turbine strömenden heissen Gase bewirkt.

Eine dazu alternative Ausführungsform ist dadurch gekennzeichnet, dass das Kühlmedium nach Durchlaufen des Reformierungsprozesses in der jeweiligen Leit- und/oder Laufschaufel zumindest teilweise als Brennstoff in einer Brennkammer der Gasturbinenanlage verwendet wird. Auch hier wird die chemische Energie des reformierten Brennstoffes in den Kreisprozess der Gasturbine zurückgeführt. In beiden Fällen wird die thermische Energie der heissen Turbinenabgase durch die sogenannte "chemische Rekuperation" noch effektiver ausgenutzt. Dabei ist es durchaus denkbar, dass das reformierte Kühlmedium nicht ausschliesslich, sondern als Zusatz zu einem weiteren Brennstoff in der Brennkammer der Gasturbinenanlage verwendet wird.

Eine bevorzugte Ausführungsform der Gasturbinenanlage nach der Erfindung ist dadurch gekennzeichnet, dass die Kühlkanäle durch Wände begrenzt sind, welche mit Katalysatorschichten bedeckt sind.

Die Einführung des reformierten Brennstoffes in die Gasturbine geschieht entweder dadurch, dass an den durch das Kühlmedium gekühlten Leit- und/oder Laufschaufeln Austrittsöffnungen vorgesehen sind, durch welche das Kühlmedium nach Durchlaufen der Kühlkanäle aus den Leit- und/oder Laufschaufeln austreten kann, oder dadurch, dass Brennstoffleitungen vorhanden sind, durch welche das Kühlmedium nach Durchlaufen der Kühlkanäle einer Brennkammer der Gasturbinenanlage zugeführt wird.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: eine schematische Darstellung für ein Verfahren gemäss einem ersten Ausführungsbeispiel der Erfindung mit direkter Einspeisung des reformierten Brennstoffes in die Turbinenstufen der Gasturbine;
- Fig. 2: eine schematische Darstellung für ein Verfahren gemäss einem zweiten Ausführungsbeispiel der Erfindung mit Einspeisung des reformierten Brennstoffes in die Brennkammer der Gasturbine;
- Fig. 3: in perpektivischer Seitenansicht eine Turbinenschaufel, wie sie für ein Verfahren nach Fig. 1 geeignet ist; und
- Fig. 4: die Turbinenschaufel aus Fig. 3 im Längsschnitt (Fig. 4A) und die Wände der Kühlkanäle aus Fig. 4A in einem vergrösserten Ausschnitt (Fig. 4B).

### WEGE ZUR AUSFÜHRUNG DER ERFINDUNG

Gemäss der vorliegenden Erfindung wird vorgeschlagen, Brennstoff in Form von Erdgas (natural gas NG) mit Dampf zu vermischen, und in dieser Mischung katalytische, endotherme Dampf-Reformierungs-Reaktionen auf den inneren Wärmeübergangsflächen der Kühlkanäle in den Turbinenschaufeln durchzuführen, um gleichzeitig die Kühlung gegenüber der reinen Dampfkühlung zu verbessern und einen Strom von Synthesegas zu erzeugen, der dann wieder für den Antrieb der Gasturbine eingesetzt wird. Die Kühlung der Oberflächen der Turbine kann dadurch dramatisch verbessert werden. Diese Art der Kühlung kann in der ersten Turbinenstufe, in den Leitschaufeln an der Turbinendüse, und in den nachfolgenden Turbinenschaufeln durchgeführt werden. Gemäss Fig. 3 und 4 weisen die Schaufeln 35, die ein Blatt 37 und einen Schaufelfuss 36 umfassen, dazu in ihrem Inneren Kühlkanäle 39 auf, die von Wänden 40 begrenzt sind. Eine Katalysatorschicht 41 auf diesen Wänden 40 bewirkt die katalytische Reformierungsreaktion des durch die Kühlkanäle 39 geleiteten Dampf-Brennstoff-Gemisches.

Die endotherme Reaktion findet ohne weiteres bei den typischen Bedingungen statt, wie sie in den Kühlkanälen der Gasturbinenschaufeln, nämlich bei Temperaturen zwischen 600°C und 800°C und Drücken zwischen 10 und 30 bar, und zwar mit der folgenden Reaktionsstöchiometrie:

CH₄ + H₂O = CO + 3H₂ ΔH = -205 kJ/mol

CO + H₂O = CO₂ + H₂ ΔH = 41,8 kJ/mol

Der Gesamtprozess ist endotherm und entfernt Energie von den Metalloberflächen der Turbinenschaufeln. In kommerziellen Darnpfreformem wird die Dampf-Methan-Mischung bei einem Verhältnis von 3:1 bis 4:1 auf einer molaren Basis gehalten und die Einlasstemperatur der Mischung ist ungefähr 500°C, während die Auslasstemperatur zwischen 800°C und 850°C liegt.

Das bei der Reformierung entstehende, mit Dampf verdünnte Synthesegas kann nun gemäss Fig. 1 und 2 auf zwei verschiedene Weisen eingesetzt werden, um die rekuperierte Energie wieder für den Gasturbinenprozess nutzbar zu machen:

### 1. Direktes Eindüsen in die Turbine (steam injection gas turbine STIG mit Zwischenerhitzung) gemäss Fig. 1

Das Gas kann in die Strömung der Gasturbine eingedüst werden, um die zusätzliche chemische Energie freizusetzen. Dies bewirkt eine Zwischenerhitzung ("reheat") und eine entsprechende Erhöhung im Wirkungsgrad und in der Ausgangsleistung. Der zugehörige Prozess ist schematisch in Fig. 1 wiedergegeben. Die Gasturbinenanlage 10 umfasst dabei in üblicher Weise einen Kompressor 11 mit zugehörigem Lufteinlass 12 zum Ansaugen und Verdichten von Verbrennungsluft, eine Brennkammer 13 mit einer Brennstoffzuführung 14, in welcher Brennkammer der Brennstoff unter Zufügen der verdichteten Verbrennungsluft verbrannt wird, und eine oder mehrere Turbinenstufen 16,..,18, durch welche die heissen Verbrennungsgase aus der Brennkammer 13 geleitet werden und die Gasturbine antreiben. Kompressor 11, Turbinenstufen 16,..,18 und ein elektrischer Generator 19 sitzen auf einer gemeinsamen Welle 15.

Als separate Einheiten gezeichnet sind in Fig. 1 die mit den Katalysator-bestückten Kühlkanälen ausgerüsteten Schaufelanordnungen 20 und 21, die als reformierende Wärmetauscher wirken. Die obere sägezahnförmig dargestellte Leitung L1 innerhalb der Schaufelanordnungen 20, 21 symbolisiert dabei den Turbinenkanal, in welchem die heissen Gase um die zu kühlenden Schaufeln strömen. Die untere sägezahnförmig dargestellte Leitung L2 innerhalb der Schaufelanordnungen 20, 21 symbolisiert die Kühlkanäle innerhalb der Schaufeln, durch welche die zu reformierende, kühlende Dampf-Brennstoff-Mischung strömt. Zwischen beiden "Leitungen" L1 und L2 findet ein Wärmeübergang nach Art eines Wärmetauschers durch die Aussenwände der Schaufeln statt.

Die oberen "Leitungen" L1 der Schaufelanordnungen 20, 21 sind dementsprechend mit den von Heissgas durchströmten Turbinenstufen 16,..,18 verbunden. Die unteren Leitungen L2 werden von der Mischung aus Dampf und methanhaltigem Brennstoff durchströmt, die durch eine Kühlleitung 25 herangeführt wird. Der Dampf stammt dabei aus einem Verdampfer 22, der von den heissen, an einem Abgasauslass 28 austretenden Abgasen der letzten Turbinenstufe 18 durchströmt wird, und das über eine Wasserzuführung 27 zugeführte Wasser in Dampf umwandelt. Dem aus dem Verdampfer 22 austretenden Dampf wird in der Kühlleitung 25 dann durch eine Brennstoffeinspeisung 26 der zu reformierende Brennstoff zugemischt. Die Dampf-Brennstoff-Mischung wird beim Durchströmen der unteren Leitungen L2 bzw. Kühlkanälen in den Schaufelanordnungen 20, 21 katalytisch umgewandelt, und das entstehende, wasserstoffhaltige Dampf-Brennstoff-Gemisch wird über Brennstoffleitungen 29, 30 direkt in die nachfolgenden Turbinenstufen 17, 18 eingespeist. Die Brennstoffleitungen 29, 30 sind dabei beispielsweise mit den Austrittsöffnungen 38 in Fig. 3, 4 identisch. Ist die katalytische Umwandlung bei einem Durchgang durch die unteren Leitungen L2 unvollständig, kann ein Teil der austretenden Mischung über Ventile 23, 24 wieder in die Kühlleitung 25 zurückgeführt und so erneut dem Reformierungsprozess zugeführt werden.

Die Eindüsung des reformierten Kühlmediums kann - wie oben bereits erwähnt - direkt durch entsprechende Austrittsöffnungen 38 in den Schaufeln erfolgen. Es ist aber genausogut auch möglich, das reformierte Kühlmedium zentral zu sammeln und durch separate Eindüsungsvorrichtungen in die Turbine einzudüsen. Die Wirkung der Eindüsung von zusätzlichem Brennstoff auf den Wirkungsgrad ist ähnlich wie in der Druckschrift DE-C1-41 40 653 beschrieben, wo anstelle von Luft Methan zur Kühlung von Kompressorschaufeln verwendet und anschliessend in den Turbinenstrom eingedüst wurde. Das eingedüste Methan wurde dann durch zwischen dem Kompressor und der Turbine angeordnete Katalysatoren oxidiert. Durchgeführte Berechnungen ergaben, dass durch die Eindüsung von zusätzlichen 15-20% Brennstoff der Wirkungsgrad im Kombiprozess um bis zu 3,1% (bzw. von 48,1% auf 51,5% in der Gesamtanlage) gesteigert werden konnte. Bei der vorliegenden Erfindung werden allerdings im Unterschied dazu keine Katalysatoren zur Oxidation des eingedüsten reaktiven Kühlmediums benötigt, weil hier das reformierte Kühlmedium hochreaktiven Wasserstoff enthält. Ausserdem führt die endotherme Refomierungsreaktion in den Turbinenschaufeln, wie sie im Rahmen der Erfindung stattfindet, zu einer deutlich effektiveren Kühlung der Schaufeln.

### 2. Verwendung des reformierten gasförmigen Brennstoffes als Brennstoff für die Brennkammer der Gasturbine gemäss Fig. 2

Das reformierte Gas kann in einer Gasturbinenanlage 31 nach Fig. 2 auch als Hauptbrennstoff oder als Zusatz zum Hauptbrennstoff für die Brennkammer 13 der Anlage verwendet werden. Die unteren Leitungen L2 der Schaufelanordnungen 20 und 21 sind hierbei über Brennstoffleitungen 33 bzw. 34 mit der Brennstoffzuführung 14 der Brennkammer 13 verbunden. Soll der reformierte Brennstoff nur als Zusatz zum Hauptbrennstoff verwendet werden, ist eine zusätzliche Brennstoffeinspeisung 32 vorgesehen, durch welche der Hauptbrennstoff (Erdgas oder dgl.) in die Brennstoffzuführung 14 eingespeist wird. Auch in diesem Fall ist der Gesamtwirkungsgrad durch Zusatz des reformierten Brennstoffes im Vergleich zum einfachen Kombiprozess deutlich verbessert, wobei zusätzlich die Kühlung der Schaufeln dramatisch verbessert ist. Wie bei dem Ausführungsbeispiel der Fig. 1 kann auch hier ein Teil des aus den unteren Leitungen L2 in den Schaufelanordnungen 20, 21 austretenden Gemisches über entsprechende Ventile 23, 24 in die Kühlleitung zurückgespeist werden.

Ein zusätzlicher Vorteil ergibt sich aus der hohen Reaktivität des reformierten, wasserstoffhaltigen Brennstoffes. Hierdurch werden die Entflammbarkeitsgrenzen des Verbrennungsprozesses erweitert und die verbrennungsbedingten Instabilitäten (Pulsationen etc.) reduziert. Darüber hinaus ist der reformierte Brennstoff auch hilfreich für die Zündung und Aufrechterhaltung einer Katalysator-stabilisierten thermischen Verbrennung, weil der Wasserstoffzusatz die katalytische Zündtemperatur des Erdgases deutlich herabsetzt.

Selbstverständlich ist es im Rahmen der Erfindung auch denkbar, Mischformen der beiden oben beschriebenen Prozessvarianten vorzusehen, d.h., das reformierte Gas sowohl als Zusatz zum Hauptbrennstoff als auch zur direkten Eindüsung in den Turbinenstrom verwenden.

### BEZUGSZEICHENLISTE

- 10,31: Gasturbinenanlage
- 11: Kompressor
- 12: Lufteinlass
- 13: Brennkammer
- 14: Brennstoffzuführung
- 15: Welle
- 16,..,18: Turbinenstufe
- 19: Generator
- 20,21: Schaufelanordnung
- 22: Verdampfer
- 23,24: Ventil
- 25: Dampfleitung
- 26,32: Brennstoffeinspeisung
- 27: Wasserzuführung
- 28: Abgasauslass
- 29,30: Brennstoffleitung
- 33,34: Brennstoffleitung
- 35: Schaufel.
- 36: Schaufelfuss
- 37: Blatt
- 38: Austrittsöffnung
- 39: Kühlkanal
- 40: Wand
- 41: Katalysatorschicht
- L1,2: Leitung

## Patentansprüche

1. Verfahren zum Kühlen von Leit- und/oder Laufschaufeln (20, 21) in den Turbinenstufen (16,..,18) einer Gasturbinenanlage (10, 31), bei welchem Verfahren ein Kühlmedium, das einen ersten Brennstoff enthält, durch das Innere der zu kühlenden Leit- und/oder Laufschaufeln (20, 21) geschickt und dort unter Einsatz eines Katalysators (41) einem endothermen chemischen Prozess unterzogen wird, bei welchem Prozess der erste Brennstoff zumindest teilweise in einen zweiten Brennstoff umgewandelt wird, und bei welchem Verfahren das den zweiten Brennstoff enthaltene Kühlmedium nach Austritt aus den Leit- und/oder Laufschaufeln (20, 21) als Brennstoff zum Antrieb der Gasturbinenanlage (10, 31) eingesetzt wird, wobei der erste Brennstoff ein Methan enthaltendes Gas, insbesondere Erdgas, ist, und als Kühlmedium eine Mischung des ersten Brennstoffes mit Dampf verwendet wird, die in dem endothermen chemischen Prozess zu einer Reformierung des Methans führt, **dadurch gekennzeichnet, dass** nach Durchlaufen des Reformierungsprozesses jeweils ein Teil des Kühlmediums abgezweigt und dem zu reformierenden Kühlmedium wieder zugefügt wird.

2. Verfahren nach Anspruch 1, **dadurch gekennzeichnet, dass** im Inneren der zu kühlenden Leit- und/oder Laufschaufeln (20, 21; 35) Kühlkanäle (39) vorgesehen sind, welche durch mit einer Katalysatorschicht (41) bedeckte Wände (40) begrenzt sind, und dass das Kühlmedium durch die Kühlkanäle (39) geschickt wird.

3. Verfahren nach einem der Ansprüche 1 und 2, **dadurch gekennzeichnet, dass** die Reformierung des Methans in den Leit- und/oder Laufschaufeln (20, 21) bei Temperaturen zwischen 600 und 800°C und Drücken zwischen 10 und 30 bar durchgeführt wird.

4. Verfahren nach einem der Ansprüche 1 bis 3, **dadurch gekennzeichnet, dass** in dem Kühlmedium vor Eintritt in die Leit- und/oder Laufschaufeln (20, 21) ein Verhältnis von Dampf zu Methan von 3:1 bis 4:1 auf molarer Basis vorliegt.

5. Verfahren nach einem der Ansprüche 1 bis 4, **dadurch gekennzeichnet, dass** das Kühlmedium nach Durchlaufen des Reformierungsprozesses in der jeweiligen Leit- und/oder Laufschaufel (20, 21) durch entsprechende Austrittsöffnungen (38) zumindest teilweise direkt in die jeweilige Turbinenstufe (16,..,18) der Gasturbinenanlage (10) austritt.

6. Verfahren nach einem der Ansprüche 1 bis 4, **dadurch gekennzeichnet, dass** das Kühlmedium nach Durchlaufen des Reformierungsprozesses in der jeweiligen Leit- und/oder Laufschaufel (20, 21) zumindest teilweise als Brennstoff in einer Brennkammer (13) der Gasturbinenanlage (31) verwendet wird.

7. Verfahren nach Anspruch 6, **dadurch gekennzeichnet, dass** das reformierte Kühlmedium als Zusatz zu einem weiteren Brennstoff in der Brennkammer (13) der Gasturbinenanlage (31) verwendet wird.

8. Gasturbinenanlage zur Durchführung des Verfahrens nach Anspruch 1, welche Gasturbinenanlage (10, 31) eine oder mehrere Turbinenstufen (16,..,18) umfasst, in welchen eine Vielzahl von Leit- und/oder Laufschaufeln (35) innerhalb verschiedener Schaufelanordnungen (20, 21) angeordnet sind, und in ihrem Inneren Kühlkanäle (39) mit katalytischen Eigenschaften aufweisen, wobei die Kühlkanäle (39) über eine Kühlleitung (25) mit einer Dampfquelle (22) in Verbindung stehen, und die Kühlleitung (25) eine Brennstoffeinspeisung (26) zur Einleitung des ersten Brennstoffes in die Kühlleitung (25) aufweist, **dadurch gekennzeichnet, dass** die Kühlkanäle (39; L2) ausgangsseitig über Ventile (23, 24) mit der Kühlleitung (25) verbunden sind.

9. Gasturbinenanlage nach Anspruch 8, **dadurch gekennzeichnet, dass** die Dampfquelle ein Verdampfer (22) ist, der von den heissen Abgasen der Gasturbinenanlage (10, 31) durchströmt wird und Wasser, welches durch eine Wasserzuführung (27) zugeführt wird, in Dampf umwandelt.

10. Gasturbinenanlage nach einem der Ansprüche 8 und 9, **dadurch gekennzeichnet, dass** die Kühlkanäle (39) durch Wände (40) begrenzt sind, welche **mit Katalysatorschichten (41) bedeckt sind.**

11. Gasturbinenanlage nach einem der Ansprüche 8 bis 10, **dadurch gekennzeichnet, dass** an den durch das Kühlmedium gekühlten Leit- und/oder Laufschaufeln (20, 21; 35) Austrittsöffnungen (38) vorgesehen sind, durch welche das Kühlmedium nach Durchlaufen der Kühlkanäle (39) aus den Leit- und/oder Laufschaufeln (20, 21; 35) austreten kann.

12. Gasturbinenanlage nach einem der Ansprüche 8 bis 10, **dadurch gekennzeichnet, dass** Brennstoffleitungen (33, 34) vorhanden sind, durch welche das Kühlmedium nach Durchlaufen der Kühlkanäle (39) einer Brennkammer (13) der Gasturbinenanlage (31) zugeführt wird.

## Claims

1. Method for the cooling of guide vanes and/or moving blades (20, 21) in the turbine stages (16,..,18) of a gas turbine plant (10, 31), in which method a cooling medium, which contains a first fuel, is fed through the interior of the guide vanes and/or moving blades (20, 21) to be cooled and, using a catalyst (41), undergoes there an endothermal chemical process in which the first fuel is converted at least partially into a second fuel, and in which method the cooling medium containing the second fuel, after flowing out of the guide vanes and/or moving blades (20, 21), is used as fuel for driving the gas turbine plant (10, 31), wherein the first fuel is a methane-containing gas, in particular natural gas, and a mixture of the first fuel with steam is used as the cooling medium and leads to a reforming of the methane in the endothermal chemical process, **characterized in that**, after the completion of the reforming process, in each case part of the cooling medium is branched off and is added again to the cooling medium to be reformed.

2. Method according to Claim 1, **characterized in that** cooling ducts (39), which are delimited by walls (40) covered with a catalyst layer (41), are provided in the interior of the guide vanes and/or moving blades (20, 21; 35) to be cooled, and **in that** the cooling medium is fed through the cooling ducts (39).

3. Method according to one of Claims 1 and 2, **characterized in that** the reforming of the methane in the guide vanes and/or moving blades (20, 21) is carried out at temperatures of between 600 and 800°C and at pressures of between 10 and 30 bar.

4. Method according to one of Claims 1 to 3, **characterized in that** a ratio of steam to methane of 3:1 to 4:1 on a molar basis prevails in the cooling medium before inflow into the guide vanes and/or moving blades (20, 21).

5. Method according to one of Claims 1 to 4, **characterized in that** the cooling medium, after running through the reforming process in the respective guide vane and/or moving blade (20, 21), flows out through corresponding outflow orifices (38), at least partially, directly into the respective turbine stage (16,..,18) of the gas turbine plant (10).

6. Method according to one of Claims 1 to 4, **characterized in that** the cooling medium, after running through the reforming process in the respective guide vane and/or moving blade (20, 21), is used at least partially as fuel in a combustion chamber (13) of the gas turbine plant (31).

7. Method according to Claim 6, **characterized in that** the reformed cooling medium is used as an additive to a further fuel in the combustion chamber (13) of the gas turbine plane (31).

8. Gas turbine plant for carrying out the method according to Claim 1, which gas turbine plant (10, 31) comprises one or more turbine stages (16,..,18), in which a multiplicity of guide vanes and/or moving blades (35) are arranged in various vane/blade arrangements (20, 21) and have in their interior cooling ducts (39) with catalytic properties, wherein the cooling ducts (39) are connected to a steam source (22) via a cooling line (25), and the cooling line (25) has a fuel feed (26) for introducing the first fuel into the cooling line (25), **characterized in that** the cooling ducts (39; L2) are connected on the outlet side to the cooling line (25) via valves (23, 24).

9. Gas turbine plant according to Claim 8, **characterized in that** the steam source is an evaporator (22), through which the hot exhaust gases from the gas turbine plant (10, 31) flow and which converts water supplied by means of a water supply (27) into steam.

10. Gas turbine plant according to one of Claims 8 and 9, **characterized in that** the cooling ducts (39) are delimited by walls (40) which are covered with catalyst layers (41).

11. Gas turbine plant according to one of Claims 8 to 10, **characterized in that** outflow orifices (38) are provided on the guide vanes and/or moving blades (20, 21; 35) cooled by the cooling medium, through which outflow orifices the cooling medium can flow out of the guide vanes and/or moving blades (20, 21; 35) after running through the cooling ducts (39).

12. Gas turbine plant according to one of Claims 8 to 10, **characterized in that** fuel lines (33, 34) are present, through which the cooling medium, after running through the cooling ducts (39), is supplied to a combustion chamber (13) of the gas turbine plant (31).

## Revendications

1. Procédé de refroidissement d'aubes fixes et/ou d'aubes mobiles (20, 21) dans les étages de turbine (16, ..., 18) d'une installation de turbine à gaz (10, 31), dans lequel un fluide de refroidissement qui contient un premier combustible est passé par l'intérieur des aubes fixes et/ou des aubes mobiles (20, 21) qui doivent être refroidies et y subit un processus chimique endothermique avec recours à un catalyseur (41), processus dans lequel le premier combustible est converti au moins en partie en un deuxième combustible et dans lequel le fluide de refroidissement qui contient le deuxième combustible est utilisé comme combustible pour entraîner l'installation de turbine à gaz (10, 31) après qu'il est sorti des aubes fixes et/ou des aubes mobiles (20, 21), le premier combustible étant un gaz qui contient du méthane et est en particulier le gaz naturel, un mélange du premier combustible avec de la vapeur qui entraîne dans le processus chimique endothermique un reformage du méthane étant utilisé comme fluide de refroidissement, **caractérisé en ce qu'**après que l'opération de reformage est terminée, une partie du fluide de refroidissement est dérivée et est renvoyée dans le fluide de refroidissement à reformer.

2. Procédé selon la revendication 1, **caractérisé en ce qu'**à l'intérieur des aubes fixes et/ou des aubes mobiles (20, 21; 35) à refroidir sont prévus des canaux de refroidissement (39) qui sont délimités par une paroi (40) recouverte d'une couche de catalyseur (41) et **en ce que** le fluide de refroidissement est passé par les canaux de refroidissement (39).

3. Procédé selon l'une des revendications 1 et 2, **caractérisé en ce que** le reformage du méthane dans les aubes fixes et/ou les aubes mobiles (20, 21) est réalisé à des températures comprises entre 600 et 800°C et sous des pressions comprises entre 10 et 30 bars.

4. Procédé selon l'une des revendications 1 à 3, **caractérisé en ce qu'**avant son entrée dans les aubes fixes et/ou les aubes mobiles (20, 21), le fluide de refroidissement présente des proportions molaires entre la vapeur et le méthane de 3 : 1 à 4 : 1.

5. Procédé selon l'une des revendications 1 à 4, **caractérisé en ce qu'**après avoir subi l'opération de reformage dans chaque aube fixe et/ou chaque aube mobile (20, 21), le fluide de refroidissement sort au moins en partie directement dans l'étage de turbine (16, ..., 18) concerné de l'installation de turbine à gaz (10) par des ouvertures appropriées (38).

6. Procédé selon l'une des revendications 1 à 4, **caractérisé en ce qu'**après avoir subi l'opération de reformage dans chaque aube fixe et/ou chaque aube mobile (20, 21), le fluide de refroidissement est utilisé au moins en partie comme combustible dans une chambre de combustion (13) de l'installation de turbine à gaz (31).

7. Procédé selon la revendication 6, **caractérisé en ce que** le fluide de refroidissement reformé est utilisé en plus d'un autre combustible dans la chambre de combustion (13) de l'installation de turbine à gaz (31).

8. Installation de turbine à gaz en vue de la mise en oeuvre du procédé selon la revendication 1, laquelle turbine à gaz (10, 31) comporte un ou plusieurs étages de turbine (16, ..., 18) dans lesquels une pluralité d'aubes fixes et/ou d'aubes mobiles (35) est disposée en agencements d'aubes (20, 21) et présente à l'intérieur des canaux de refroidissement (39) qui ont des propriétés catalytiques, les canaux de refroidissement (39) communiquant par un conduit de refroidissement (25) avec une source de vapeur (22), le conduit de refroidissement (25) étant doté d'une alimentation en combustible (26) qui introduit le premier combustible dans le conduit de refroidissement (25), **caractérisée en ce que** la sortie des canaux de refroidissement (39; L2) est reliée par des vannes (23, 24) au conduit de refroidissement (25).

9. Installation de turbine à gaz selon la revendication 8, **caractérisée en ce que** la source de vapeur est un évaporateur (22) qui est traversé par les gaz de combustion chauds de l'installation de turbine (10, 31) et qui convertit en vapeur de l'eau qui est amenée par une amenée d'eau (27).

10. Installation de turbine à gaz selon l'une des revendications 8 et 9, **caractérisée en ce que** les canaux de refroidissement (39) sont délimités par des parois (40) qui sont recouvertes de couches de catalyseur (41).

11. Installation de turbine à gaz selon l'une des revendications 8 à 10, **caractérisée en ce que** des ouvertures de sortie (38) par lesquelles le fluide de refroidissement peut sortir des aubes fixes et/ou des aubes mobiles (20, 21; 35) après avoir traversé les canaux de refroidissement (39) sont prévues sur les aubes fixes et/ou les aubes mobiles (20, 21; 35) refroidies par le fluide de refroidissement.

12. Installation de turbine à gaz selon l'une des revendications 8 à 10, **caractérisée en ce qu'**elle présente des conduits de combustible (33, 34) par lesquels le fluide de refroidissement est amené à une chambre de combustion (13) de l'installation de turbine à gaz (31) après avoir traversé les canaux de refroidissement (39).
